# EUROPÄISCHE PATENTSCHRIFT

(11) **EP 2 831 143 B1**
(45) Veröffentlichungstag und Bekanntmachung des Hinweises auf die Patenterteilung: **13.11.2019**
(21) Anmeldenummer: 13712231.3
(22) Anmeldetag: 25.03.2013
(51) Int. Cl.: C08G 65/26

(54) **VERFAHREN ZUR HERSTELLUNG VON POLYETHERPOLYOLEN**
METHOD FOR PRODUCING POLYETHER POLYOLS
PROCÉDÉ DE PRODUCTION DE POLYOLS DE POLYÉTHER

(30) Priorität: 26.03.2012 EP 12161250
(43) Veröffentlichungstag der Anmeldung: 04.02.2015
(73) Patentinhaber: BASF SE, 67056 Ludwigshafen am Rhein (DE)
(72) Erfinder: WISS, Kerstin, 68165 Mannheim (DE); ZARBAKHSH, Sirus, 67063 Ludwigshafen (DE); LÖFFLER, Achim, 67346 Speyer (DE); DEGLMANN, Peter, 68163 Mannheim (DE); LIMBACH, Michael, 67551 Worms (DE); LINDNER, Ronald, 06886 Lutherstadt Wittenberg (DE); LAVY, Severine, 69117 Heidelberg (DE); LEJKOWSKI, Michael Ludwik, 68239 Mannheim (DE)
(74) Vertreter: BASF IP Association
(86) Internationale Anmeldenummer: PCT/EP2013/056202
(87) Internationale Veröffentlichungsnummer: WO 2013/144057

(56) Entgegenhaltungen:
- EP-A1- 2 327 736
- WO-A1-2009/013344
- WO-A1-2011/141492
- US-A1- 2011 282 027
- MASON ET AL: "Organocatalytic polymerisation of ethylene oxide etc", ACS POLYMER PREPRINTS, Bd. 47, 2006, Seiten 99-100, XP002679732, in der Anmeldung erwähnt
- JEAN RAYNAUD ET AL: "N-Heterocyclic Carbene-Induced Zwitterionic Ring-Opening Polymerization of Ethylene Oxide and Direct Synthesis of [alpha],[omega]-Difunctionalized Poly(ethylene oxide)s and Poly(ethylene oxide)- b -poly([epsilon]-caprolactone) Block Copolymers", JOURNAL OF THE AMERICAN CHEMICAL SOCIETY, Bd. 131, Nr. 9, 11. März 2009 (2009-03-11) , Seiten 3201-3209, XP055032446, ISSN: 0002-7863, DOI: 10.1021/ja809246f in der Anmeldung erwähnt

## Beschreibung

Die vorliegende Erfindung betrifft ein Verfahren zur Herstellung von Polyetherpolyolen (auch Polyetherole genannt) durch katalytische ringöffnende Polymerisation, wobei mindestens eine Stickstoff enthaltende cyclische Präkatalysator-Verbindung eingesetzt wird.

N-Heterocyclische Carbene (NHC) sind seit einigen Jahren als Initiatoren bzw. Organokatalysatoren für die ringöffnende Polymerisation bekannt (Dove et al., Polymer 47 (2006), 4018). Die Anwendung auf die katalytische Polymerisation von Ethylenoxid (EO) wurde zuerst im Jahr 2006 beschrieben (ACS Polymer Preprints, 47 (2006), 99). Kürzlich wurde auch von Raynaud et al. (JACS, 131 (2009), 3201; WO2009/013344 zusammen mit Rhodia) die stöchiometrische Ringöffnung von Ethylenoxid (EO) in Lösung beschrieben, wobei nach langen Reaktionszeiten zwitterionische PEG (Polyethylenglykol)-Oligomere entstehen. Im Patent werden dabei als Monomere alle technisch relevanten Alkylenoxide sowie als Katalysatoren alle gängigen Carbenstrukturen beansprucht, Beispiele aber nur für EO gegeben (und somit mögliche Vorteile der NHC-Katalysatoren für Propylenoxid (PO) nicht genannt). Zuletzt wurde von der gleichen Arbeitsgruppe im Jahr 2010 auch ein Paper zur PO Polymerisation mit monofunktionellen Startern bei ähnlichen Reaktionsbedingungen publiziert (Chem. Commun., 46 (2010), 3203), wobei aber außer der Metallfreiheit der Reaktion keine Vorteile ersichtlich sind. In allen diesen Arbeiten wird keine Anwendung für die Herstellung von Polyurethan (PU) beansprucht bzw. als besonders vorteilhaft dargestellt.

In der Patentanmeldung WO 2011/141492 wird die ringöffnende Polymerisation von Alkylenoxiden mit NHC-Katalysatoren zur Herstellung von Polyether- und Polyesterolen beschrieben. Als Vorteile dieser Erfindung werden vor allem die hohen Polymerisationsgrade mit PO (>5 PO pro OH-Gruppe des Starters im Gegensatz zu konventionellen Organokatalysatoren) und die Möglichkeit eines EO-Endcapping von PPG (Polypropylenglykol)-cores genannt. Konventionelle Katalysatoren führen entweder zu erheblichen monofunktionellen Nebenprodukten (KOH-Katalyse) oder erlauben keinen wohldefinierten Endcap auf der Mehrheit der sekundären Hydroxygruppen (bei Doppelmetallcyanid (DMC)-Katalyse).

Auch US 2011/0282027 A1 offenbart ein Verfahren zur Herstellung von Polyetherolen durch katalystische ringöffnende Polymerisation von Alkylenoxiden, wobei wenigstens ein N-heterocyclisches Carben als Katalysator eingesetzt wird.

Typische Organokatalysen mit NHCs beruhen auf deren Nucleophilie bzw. Basizität. Eine entscheidende Hürde für den großtechnischen Einsatz von NHCs stellen aber genau diese Eigenschaften dar: Freie NHCs sind typischerweise hydrolyse- und oxidationsempfindlich (J. Organomet. Chem., 617 (2001), 242). Im Prozess bietet sich daher an, die aktiven NHC-Spezies aus Präkatalysatoren in situ freizusetzen.

Eine Möglichkeit dazu ist der Einsatz von Addukten der NHCs, z. B. mit Alkoholen, Chloroform, CS₂, CO₂:

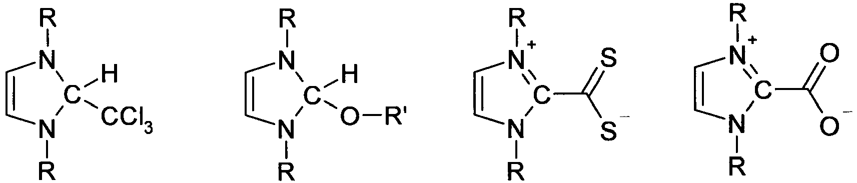

Letztere Addukte werden im Folgenden als Imidazoliumcarboxylate bezeichnet.

Die oben beispielhaft dargestellten N,N'-Dialkylimidazoliumcarboxylate stellen eine interessante Präkatalysatorklasse dar, weil CO₂ als Nebenprodukt der Zersetzung bei der Katalyse nicht stört, ggf. einreagiert, aber auf alle Fälle im Produkt verbleiben kann.

Die Freisetzung von NHC aus diesen Präkatalysatoren ist allerdings bei Raumtemperatur nur gering, und nimmt in Glykol erst oberhalb 140 °C signifikant zu (beim Dimethylimidazoliumcarboxylat), wie thermogravimetrische Untersuchungen gezeigt haben (Eur. J. Inorg. Chem., 2009, 1681; Tetrahedron Lett., 46 (2005), 2141).

Da die Freisetzung von NHC aus diesen Präkatalysatoren meist erst bei hohen Temperaturen stattfindet, muss, nach dem Stand der Technik zu schließen, viel Energie zugeführt werden. Allerdings sind die hohen Temperaturen für die folgende Reaktion von Alkylenoxiden mit Initiatoren, wie bspw. Alkoholen, problematisch, denn es treten dann vermehrt Nebenreaktionen auf; manche Starterverbindungen halten außerdem höheren Temperaturen nicht lange stand und zersetzen sich.

Durch Erhöhung der Temperatur kann das Gleichgewicht zwischen CO₂-Addukt und der katalytisch aktiven Spezies (NHC-Addukt) also in die gewünschte Richtung verschoben werden. Jedoch ist zu erwarten, dass das Gleichgewicht sich wieder in Richtung des CO₂-Addukts verschiebt, sobald die Temperatur wieder gesenkt wird, denn CO₂ wird (vor Reaktion mit Alkylenoxiden) nicht aus dem Gleichgewicht entfernt.

Es stellte sich also die Aufgabe, ein Verfahren zur Herstellung von Polyetherolen bereitzustellen, das eine effiziente Freisetzung der katalytisch aktiven Spezies erlaubt, ohne dass es während der Reaktionsphase mit Alkylenoxiden zu unerwünschten Nebenreaktionen kommt.

Diese Aufgabe konnte überraschenderweise durch das in den Ansprüchen wiedergegebene Verfahren gelöst werden.

Es wurde nämlich gefunden, dass selbst nach kurzer Temperaturerhöhung die katalytisch aktive Spezies überraschenderweise auch bei anschließend wieder geringeren Temperaturen für die Reaktion mit Alkylenoxiden zur Verfügung steht; das Gleichgewicht verschiebt sich also nicht, wie zu erwarten wäre, bei Verringerung der Temperatur wieder in Richtung des CO₂-Addukts, was möglicherweise auf eine Wechselwirkung mit dem Starter zurückzuführen ist.

Der Gegenstand der vorliegenden Anmeldung ist daher ein Verfahren zur Herstellung von Polyetherolen durch katalytische ringöffnende Polymerisation mindestens eines Alkylenoxids mit mindestens einer Zerewitinoff-aktiven Verbindung Z1, und optional mindestens einer Zerewitinoff-aktiven Verbindung Z2, wobei in einem Schritt (i) mindestens eine Stickstoff enthaltende cyclische Verbindung (A), ausgewählt aus der Gruppe bestehend aus Verbindungen mit der Formel (I) 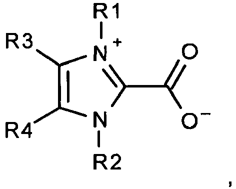 wobei R1 und R2 jeweils unabhängig voneinander ausgewählt sind aus Alkyl und Aryl, R3 und R4 jeweils unabhängig voneinander ausgewählt sind aus H, Alkyl, Aryl, oder wobei R1 und R3, R3 und R4 oder R2 und R4 einen Ring bilden, gemeinsam mit mindestens einer Zerewitinoff-aktiven Verbindung Z1 oder einer Mischung daraus, vorgelegt und für eine Dauer von 5 bis 30 Minuten, bevorzugt 10 bis 25 Minuten auf eine Temperatur im Bereich von 140 °C bis 180 °C, bevorzugt 150 °C bis 170 °C erwärmt wird, und in einem Schritt (ii) die Dosierung des mindestens einen Alkylenoxids, wahlweise in Gegenwart von Z2, durchgeführt wird.

Im Sinne der vorliegenden Anmeldung ist mit "Polyetherolen" eine Verbindung gemeint, die mehr als eine OH-Gruppe aufweist, bevorzugt mehr als zwei OH-Gruppen.

Eine "Zerewitinoff-aktive Verbindung" bezieht sich auf Verbindungen, die acide genug sind, um gängige Grignard-Verbindungen zum Kohlenwasserstoff zu protonieren. Beispiele für "Zerewitinoff-aktive Vebindungen" sind Alkohole und Amine.

Die Verbindungen (A) sind teilweise kommerziell erhältlich, zum Beispiel bei der Firma Sigma Aldrich. Die Herstellung der Verbindungen (A) ist in der Literatur mehrfach beschrieben worden, z. B. in Schossler, W.; Regitz, M. Chem. Ber. 1974, 107, 1931, und Kuhn, N.; Steimann, M.; Weyers, G. Z. Naturforsch. 1999, 54b, 427, und Holbrey, J. D.; Reichert, W. M.; Tkatchenko, I.; Bouajila, E.; Walter, O.; Tommasi, I.; Rogers, R. D. Chem. Commun. 2003, 28, sowie in Duong, H. A.; Tekavec, T. N.; Arif, A. M.; Louie, J. Chem. Commun. 2004, 112.

In einer Ausführungsform der Erfindung sind in Formel (I) R1 und R2 jeweils primäre Alkylgruppen.

In einer weiteren Ausführungsform der Erfindung ist in Formel (I) R1 eine primäre und R2 eine sekundäre Alkylgruppe.

In einer weiteren Ausführungsform der Erfindung sind in Formel (I) R1 und R2 jeweils sekundäre Alkylgruppen.

Bevorzugt wird erfindungsgemäß Schritt (ii) erst nach Ende des Schritts (i) durchgeführt; jedoch kann Schritt (ii) auch bereits während der Dauer des Schritts (i) beginnen.

In einer bevorzugten Ausführungsform des erfindungsgemäßen Verfahrens liegt die Temperatur während der Umsetzung mit dem mindestens einen Alkylenoxid im Schritt (ii) nach Ende des Schritts (i) im Bereich von 90 °C bis 140 °C, bevorzugt im Bereich von 100 °C bis 130 °C.

Die Alkylenoxide für das erfindungsgemäße Verfahren sind bevorzugt ausgewählt aus der Gruppe umfassend:

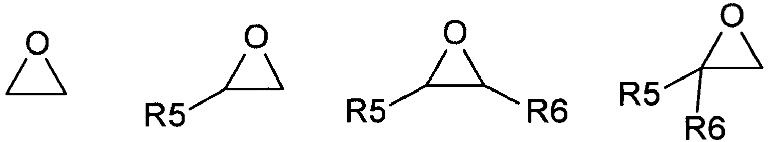

Dabei gilt: R5 und R6 sind jeweils ausgewählt aus der Gruppe bestehend aus Alkyl, Aryl, Alkenyl.

Hierbei bedeutet Alkyl bevorzugt einen Rest ausgewählt aus der Gruppe der C1- bis C10-Alkylverbindungen, bevorzugt C1- bis C2-Verbindungen, besonders bevorzugt C1-Verbindungen.

Aryl bedeutet bevorzugt einen Phenyl-Rest.

Alkenyl bedeutet bevorzugt einen Rest ausgewählt aus der Gruppe der C2- bis C10-Alkyenlyverbindungen, bevorzugt eine C3-Alkenylverbindung.

In einer bevorzugten Ausführungsform der Erfindung ist das Alkylenoxid ausgewählt aus der Gruppe enthaltend Ethylenoxid (EO), Propylenoxid (PO) und Butylenoxid. In einer besonders bevorzugten Ausführungsform der Erfindung werden Mischungen enthaltend Propylenoxid verwendet.

In einer Ausführungsform des erfindungsgemäßen Verfahrens werden die Monomeren M bzw. deren Gehalt während der Reaktion variiert. Daher erlaubt das erfindungsgemäße Verfahren auch die Aufbringung eines Ethylenoxid (EO)-Endcaps.

Auch die Copolymerisation, zum Beispiel mit Lactonen, Lactid und/oder cyclischen Siloxanen, ist mit dem erfindungsgemäßen Verfahren möglich.

Beispiele geeigneter Lactone für die Copolymerisation mit Alkylenoxiden sind substitutuierte oder unsubstitutierte Lactone mit 4-gliedrigen oder größeren Ringen, wie beispielsweise β-Propiolacton, δ-Valerolacton, ε-Caprolacton, Methyl-E-caprolacton, β,β-Dimethyl-β-propiolacton, β-Methyl-β-propiolacton, α-Methyl-β-propiolacton, α,α-Bis(chlormethyl)-propiolacton, Methyoxy-ε-caprolacton, Ethoxy-ε-caprolacton, Cyclohexyl-ε-caprolacton, Phenyl-E-caprolacton, Benzyl-ε-caprolacton, ζ-Enantholacton, η-Caprylolacton, α,β,γ-Trimethoxy-δ-valerolacton, oder β-Butyrolactone, und Mischungen daraus. In einer Ausführungsform wird ε-Caprolacton verwendet.

Die mindestens eine Zerewitinoff-aktive Verbindung Z1 ist bevorzugt ausgewählt aus der Gruppe bestehend aus Alkoholen, besonders bevorzugt ausgewählt aus der Gruppe der Polyole, insbesondere Glycerin, Ethylenglycol, Diethylenglycol, Propylenglycol, Dipropylenglycol, Pentaerythrit, Sorbitol, Saccharose, C₁- bis C₁₈-Diole, Rizinusöl, epoxydierte und ringgeöffnete Fettsäuren und deren Ester, Trimethylolpropan, Pentaerythrit, Zuckerverbindungen wie beispielsweise Glucose, Sorbit, Mannit und Saccharose, mehrwertige Phenole, Resole, wie z. B. oligomere Kondensationsprodukte aus Phenol und Formaldehyd und Mannich-Kondensate aus Phenolen, Formaldehyd, Dialkanolaminen, sowie Mischungen aus mindestens zwei der aufgeführten Verbindungen.

Ebenfalls bevorzugt ist mindestens eine Zerewitinoff-aktive Verbindung Z1 ausgewählt aus der Gruppe bestehend aus Aminen, insbesondere primären und sekundären aliphatischen und aromatischen Aminen oder Mischungen daraus, ganz besonders bevorzugt ausgewählt aus der Gruppe enthaltend Hexamethylendiamin, Ethylendiamin, Propylendiamin, Ethanolamin, Orthocyclohexandiamin, Aminocyclohexanalkylamin, und aromatische Amine ausgewählt aus der Gruppe enthaltend Toluoldiamin (TDA), insbesondere 2,3- und 3,4-Isomere von TDA, sowie Diphenylmethandiamin (MDA) und polymeres MDA (p-MDA), Melamin, und Mischungen daraus.

Die Zerewitinoff-aktive Verbindung Z1 kann auch mehrere Aminogruppen und/oder andere Zerewitinoff-aktive Gruppen, wie beispielsweise OH-Gruppen, enthalten.

In einer weiteren Ausführungsform des erfindungsgemäßen Verfahrens werden mindestens zwei Zerewitinoff-aktive Verbindungen Z1 verwendet, wobei mindestens eine Zerewitinoff-aktive Verbindung Z1a ausgewählt ist aus der Gruppe bestehend aus Alkoholen, bevorzugt aus der oben angegebenen Gruppe, und mindestens eine Zerewitinoff-aktive Verbindung Z1b ausgewählt ist aus der Gruppe bestehend aus Aminen, bevorzugt aus der oben angegebenen Gruppe.

Die Zerewitinoff aktive Verbindung Z2 ist in einer bevorzugten Ausführungsform des erfindungsgemäßen Verfahrens ausgewählt aus der Gruppe bestehend aus Alkoholen, besonders bevorzugt ausgewählt aus der für Z1 angegebenen Gruppe an Alkoholen.

Die Zerewitinoff aktive Verbindung Z2 ist in einer weiteren bevorzugten Ausführungsform des erfindungsgemäßen Verfahrens ausgewählt aus der Gruppe bestehend aus Aminen, besonders bevorzugt ausgewählt aus der für Z1 angegebenen Gruppe an Aminen.

In einer Ausführungsform des erfindungsgemäßen Verfahrens ist die mindestens eine Zerewitinoff-aktive Verbindung Z1 gleich der mindestens einen Zerewitinoff-aktiven Verbindung Z2. In einer anderen Ausführungsform des erfindungsgemäßen Verfahrens entspricht die mindestens eine Zerewitinoff-aktive Verbindung Z1 nicht der mindestens einen Zerewitinoff-aktiven Verbindung Z2.

In einer Ausführungsform des erfindungsgemäßen Verfahrens wird also im Schritt (i) mindestens eine Verbindung Z1 verwendet und dann die Alkoxylierung ebenfalls mit Z1 durchgeführt. In einer anderen Ausführungsform des erfindungsgemäßen Verfahrens wird zunächst im Schritt (i) eine Verbindung Z1 verwendet, dann wird jedoch die Alkoxylierung mit einer Mischung aus Z1 und einer weiteren Verbindung Z2 durchgeführt.

In einer bevorzugten Ausführungsform des erfindungsgemäßen Verfahrens wird im Schritt (i) ein Vakuum angelegt.

Polyetherole herstellbar nach dem erfindungsgemäßen Verfahren können zur Herstellung von Polyurethanen verwendet werden.

### Beispiele

Im Folgenden werden zur Veranschaulichung einiger Aspekte der vorliegenden Erfindung einige Beispiele gegeben. Diese sollen keinesfalls den Umfang der Erfindung einschränken.

In den Versuchen wurden zuerst die Starter (Alkohole) und der Katalysator in einem Autoklaven vorgelegt, der zur Inertisierung mit Stickstoff befüllt, dann auf 110-130 °C erhitzt und für mehrere Stunden unter Vakuum entgast wurde. Bei den Versuchen mit thermischer Aktivierungsstufe (i) wurde der Kessel nun für 20 Minuten auf 160 °C erhitzt. Nach Abkühlen auf die gewünschte Reaktionstemperatur wurde dann in beiden Fällen das Propylenoxid kontinuierlich unter Rühren (Rührgeschwindigkeit 600 1/min) in Schritt (ii) zudosiert. Nach abgeschlossener Dosierung und Abreaktion des Monomers wurde der Kessel dann 30 Minuten unter Vakuum evakuiert und dann auf 25 °C abgekühlt.

In der schematischen Darstellung des Versuchsverlaufes sind die Dosierprofile (siehe Legende: "PO Dosierung... ") und die resultierenden Druckverläufe dargestellt. Durch den Druckverlauf ist eine Aussage über die Reaktivität des Katalysators möglich: Bei hoher Reaktivität wurde das Propylenoxid zügig umgesetzt und es hat sich kein hoher Druck im Kessel aufgebaut. Bei geringerer Reaktivität akkumulierte das Propylenoxid und es wurden höhere Drücke beobachtet. Bei Erreichen einer durch die Auslegung des Autoklaven gegebenen Druckobergrenze musste gegebenenfalls von einer konstanten Dosierrate abgewichen und die Dosierung gedrosselt oder sogar unterbrochen werden (dünnere unterbrochene Linien in der schematischen Darstellung), was zu einer Verlängerung der Dosierzeit und somit einer Reduktion der Dosierrate führte. Um den Druckverlauf quantifizieren und die Reaktivität vergleichen zu können, werden im Folgenden die maximal erreichten Drücke im Kessel sowie Dosierzeiten und resultierende mittlere Dosierraten angegeben.

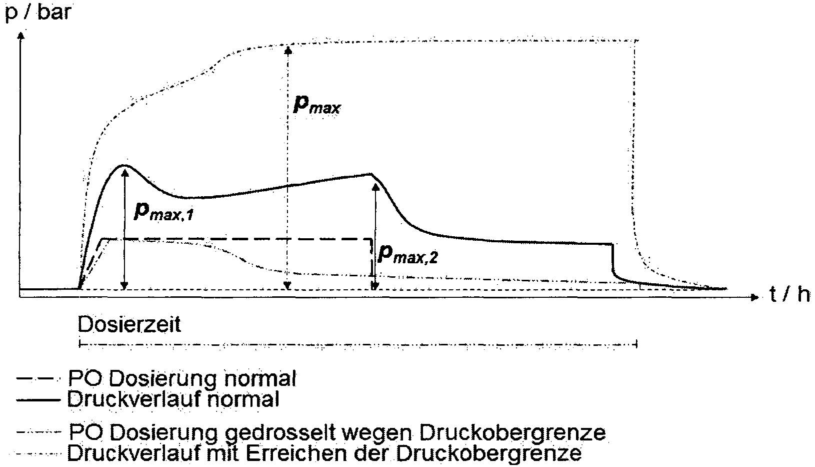

### Beispiel 1) (nicht erfinderisch)

In einem 300 mL Kessel wurden 20,0 g Glycerin, 7,69 g Diethylenglycol und 0,39 g 1,3-Dimethylimidazolium-Carboxylat vorgelegt. Nach der Inertisierung wurden bei einer Reaktionstemperatur von 115 °C 149,63 g Propylenoxid zudosiert. Hierbei wurde die Druckobergrenze von 9,79 bar erreicht und daher die Dosierung verlangsamt. Nach einer Abreaktionszeit von 5 Stunden wurden 154 g Produkt erhalten.

OHZ: 271 mg KOH/g
Viskosität: 228 mPas
pₘₐₓ = 9,79 bar
Dosierzeit: 287 Minuten
Dosierrate: 0,52 g/min

### Beispiel 2a)

In einem 300 mL Kessel wurden 20,0 g Glycerin, 7,69 g Diethylenglycol und 0,39 g 1,3-Dimethylimidazolium-Carboxylat vorgelegt. Nach der Inertisierung und einer thermischen Aktivierung bei 160 °C wurde auf die Reaktionstemperatur von 115 °C abgekühlt und dann 149,63 g Propylenoxid zudosiert. Nach einer Abreaktionszeit von 5 Stunden wurden 166,7 g Produkt erhalten.

OHZ: 255 mg KOH/g
Polydispersität (GPC): 1,118
Viskosität: 178 mPas
p_{max,1} = 3,54 bar
p_{max,2} = 3,16 bar
Dosierzeit: 226 Minuten
Dosierrate: 0,66 g/min

### Beispiele 2b-e)

Unter analogen Bedingungen wie in Beispiel 2a beschrieben konnte auch mit anderen Katalysatoren ein ähnliches Produkt erhalten werden. Diese Katalysatoren unterschieden sich nur bezüglich der 1,3-Alkylsubstitution (R1 und R2 in Formel (I)) vom Katalysator aus Beispiel 2a. Die jeweiligen Substituenten sowie die entsprechenden Ergebnisse sind in der folgenden Tabelle zusammengefasst.

| * | #2b | #2c | #2d | #2e |
|---|---|---|---|---|
| R1 | Methyl | Ethyl | n-Propyl | Isopropyl |
| R2 | Ethyl | Ethyl | n-Propyl | Isopropyl |
| m(Kat.) | 0,42 g | 0,47 g | 0,55 g | 0,55 g |
| Aktiv. | Ja | Ja | Ja | Ja |
| Produkt | 168,4 g | 166,9 g | 165,2 g | 166,1 g |
| OHZ | 258 | 254 | 257 | 259 |
| PDI | 1,120 | 1,111 | 1,108 | 1,113 |
| Visko | 187 | 177 | 181 | 192 |
| p_{max,1} | 3,3 | 3,6 | 3,4 | 3,8 |
| p_{max,2} | 3,1 | 3,2 | 3,3 | 3,5 |
| Zeit | 226 | 226 | 226 | 226 |
| Rate | 0,66 | 0,66 | 0,66 | 0,66 |

| | | | | |
|---|---|---|---|---|
| *Erläuterungen: m(Kat.) = Masse des Katalysators, Aktiv. = Aktivierung bei 160°C für 20 Minuten, OHZ in mg KOH/g, PDI = Polydispersität (GPC), Visko = Viskosität in mPas, p_{max,1 und 2} in bar, Zeit = Dosierzeit in Minuten, Rate = Dosierrate in g/min | | | | |

### Beispiel 3)

In einem 300 mL Kessel wurden 20,0 g Glycerin, 7,69 g Diethylenglycol und 0,89 g 1,3-Dimethylimidazolium-Carboxylat vorgelegt. Nach der Inertisierung und einer Aktivierung bei 160 °C wurde eine Reaktionstemperatur von 160 °C beibehalten und dann 149,63 g Propylenoxid zudosiert. Nach einer Abreaktionszeit von 5 Stunden wurden 167,4 g Produkt erhalten.

OHZ: 277 mg KOH/g
Polydispersität (GPC): 1,159
Viskosität: 142 mPas
p_{max,1} = 4,06 bar
p_{max,2} = 5,38 bar
Dosierzeit: 240 Minuten
Dosierrate: 0,62 g/min

### Beispiel 4)

In einem 300 mL Kessel wurden 20,0 g Glycerin, 7,69 g Diethylenglycol und 0,89 g 1,3-Dimethylimidazolium-Carboxylat vorgelegt. Nach der Inertisierung und einer Aktivierung bei 160 °C wurde auf eine Reaktionstemperatur von 115 °C abgekühlt und dann 149,63 g Propylenoxid zudosiert. Nach einer Abreaktionszeit von 5 Stunden wurden 163,2 g Produkt erhalten, wobei sich hier bei Auswertung der Druckkurve mit Hinblick auf den Abfall des Drucks während der Abreaktion ergab, dass die Abreaktion eigentlich schon nach 2 Stunden vollständig war. Die Druckkonstanz wurde deutlich eher erreicht als in Beispiel 3, wo die vollen 5 Stunden für eine vollständige Abreaktion nötig waren, weil sich bei den hohen Temperaturen aus Beispiel 3 Teile der katalytisch aktiven Spezies durch die hohe Temperaturbelastung zersetzen. Diese Reaktionsbedingungen sind außerdem vorteilhaft, weil sich einige potentielle Alkohole, die in der Alkoxylierung verwendet werden, auch bereits bei einer dauerhaften thermischen Belastung bei 160 °C zersetzen.

OHZ: 267 mg KOH/g
Polydispersität (GPC): 1,125
Viskosität: 154 mPas
p_{max,1} = 3,19 bar
p_{max,2} = 2,75 bar
Dosierzeit: 240 Minuten
Dosierrate: 0,62 g/min

Die Analytik der nach dieser Methode erhaltenen Produkte weist als Hauptprodukte die erwarteten Propoxylate aufbauend auf Glycerin und Diethylenglycol auf. Als charakteristisches Nebenprodukt ist ebenfalls das Propoxylat des Katalysators zu finden.

Exemplarisch hier der Nachweis der formalen Propoxylate des Imidazoliums mittels HPLC/MS-Kopplung:
[M]⁺ 271, 387, 445 amu
Diese Massen weisen auf Propoxylate (n = 3, 5, 6) des 1,3-Dimethylimidazolium-Kations hin.

## Patentansprüche

1. Verfahren zur Herstellung von Polyetherolen durch katalytische ringöffnende Polymerisation mindestens eines Alkylenoxids mit mindestens einer Zerewitinoff-aktiven Verbindung Z1 und optional mindestens einer Zerewitinoff-aktiven Verbindung Z2, wobei in einem Schritt (i) mindestens eine Stickstoff enthaltende cyclische Verbindung (A), ausgewählt aus der Gruppe bestehend aus Verbindungen mit der Formel (I) 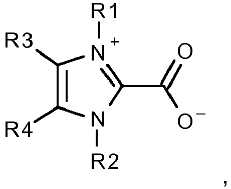 wobei R1 und R2 jeweils unabhängig voneinander ausgewählt sind aus Alkyl und Aryl, R3 und R4 jeweils unabhängig voneinander ausgewählt sind aus H, Alkyl, Aryl, oder wobei R1 und R3, R3 und R4 oder R2 und R4 einen Ring bilden, gemeinsam mit mindestens einer Zerewitinoff-aktiven Verbindung Z1 oder einer Mischung daraus, vorgelegt und für eine Dauer von 5 bis 30 Minuten, bevorzugt 10 bis 25 Minuten auf eine Temperatur im Bereich von 140 °C bis 180 °C, bevorzugt 150 °C bis 170 °C erwärmt wird, und in einem Schritt (ii) die Dosierung des mindestens einen Alkylenoxids, wahlweise in Gegenwart von Z2, durchgeführt wird.

2. Verfahren zur Herstellung von Polyetherolen gemäß Anspruch 1, wobei in Formel (I) R1 und R2 jeweils primäre Alkylgruppen sind.

3. Verfahren zur Herstellung von Polyetherolen gemäß Anspruch 1, wobei in Formel (I) R1 eine primäre und R2 eine sekundäre Alkylgruppe ist.

4. Verfahren zur Herstellung von Polyetherolen gemäß Anspruch 1, wobei in Formel (I) R1 und R2 jeweils sekundäre Alkylgruppen sind.

5. Verfahren zur Herstellung von Polyetherolen gemäß einem der Ansprüche 1 bis 4, wobei Schritt (ii) erst nach Ende des Schritts (i) durchgeführt wird.

6. Verfahren zur Herstellung von Polyetherolen gemäß einem der Ansprüche 1 bis 4, wobei Schritt (ii) bereits während der Dauer des Schritts (i) beginnt.

7. Verfahren zur Herstellung von Polyetherolen gemäß einem der Ansprüche 1 bis 6, wobei die Temperatur während der Umsetzung mit dem mindestens einen Alkylenoxid im Schritt (ii) nach Ende des Schritts (i) im Bereich von 90 °C bis 140 °C, bevorzugt im Bereich von 100 °C bis 130 °C liegt.

8. Verfahren zur Herstellung von Polyetherolen gemäß einem der Ansprüche 1 bis 7, wobei mindestens ein Alkylenoxid ausgewählt ist aus der Gruppe bestehend aus Ethylenoxid, Propylenoxid, Butylenoxid und Mischungen daraus, bevorzugt Mischungen enthaltend Propylenoxid.

9. Verfahren zur Herstellung von Polyetherolen gemäß einem der Ansprüche 1 bis 8, wobei mindestens eine Zerewitinoff-aktive Verbindung Z1 ausgewählt ist aus der Gruppe bestehend aus Alkoholen, bevorzugt ausgewählt aus der Gruppe der Polyole, insbesondere Glycerin, Ethylenglycol, Diethylenglycol, Propylenglycol, Dipropylenglycol, Pentaerythrit, Sorbitol, Saccharose, C₁- bis C₁₈-Diole, Rizinusöl, epoxydierte und ringgeöffnete Fettsäuren und deren Ester, Trimethylolpropan, Zuckerverbindungen wie beispielsweise Glucose, Sorbit, Mannit und Saccharose, mehrwertige Phenole, Resole, wie z. B. oligomere Kondensationsprodukte aus Phenol und Formaldehyd und Mannich-Kondensate aus Phenolen, Formaldehyd, Dialkanolaminen, sowie Mischungen aus mindestens zwei der aufgeführten Verbindungen.

10. Verfahren zur Herstellung von Polyetherolen gemäß einem der Ansprüche 1 bis 9, wobei mindestens eine Zerewitinoff-aktive Verbindung Z1 ausgewählt ist aus der Gruppe bestehend aus Aminen, insbesondere primären und sekundären aliphatischen und aromatischen Aminen oder Mischungen daraus, besonders bevorzugt ausgewählt aus der Gruppe enthaltend Hexamethylendiamin, Ethylendiamin, Propylendiamin, Ethanolamin, Orthocyclohexandiamin, Aminocyclohexanalkylamin, und aromatische Amine ausgewählt aus der Gruppe enthaltend Toluoldiamin (TDA), insbesondere 2,3- und 3,4-Isomere von TDA, sowie Diphenylmethandiamin (MDA) und polymeres MDA (p-MDA), Melamin, und Mischungen daraus.

11. Verfahren zur Herstellung von Polyetherolen gemäß einem der Ansprüche 1 bis 10, wobei mindestens eine Zerewitinoff-aktive Verbindung Z2 ausgewählt ist aus der Gruppe bestehend aus Alkoholen, bevorzugt ausgewählt aus der Gruppe der Polyole, insbesondere Glycerin, Ethylenglycol, Diethylenglycol, Propylenglycol, Dipropylenglycol, Pentaerythrit, Sorbitol, Saccharose, C₁₋ bis C₁₈-Diole, Rizinusöl, epoxydierte und ringgeöffnete Fettsäuren und deren Ester, Trimethylolpropan, Zuckerverbindungen wie beispielsweise Glucose, Sorbit, Mannit und Saccharose, mehrwertige Phenole, Resole, wie z. B. oligomere Kondensationsprodukte aus Phenol und Formaldehyd und Mannich-Kondensate aus Phenolen, Formaldehyd, Dialkanolaminen, sowie Mischungen aus mindestens zwei der aufgeführten Verbindungen.

12. Verfahren zur Herstellung von Polyetherolen gemäß einem der Ansprüche 1 bis 11, wobei mindestens eine Zerewitinoff-aktive Verbindung Z2 ausgewählt ist aus der Gruppe bestehend aus Aminen, insbesondere primären und sekundären aliphatischen und aromatischen Aminen oder Mischungen daraus, besonders bevorzugt ausgewählt aus der Gruppe enthaltend Hexamethylendiamin, Ethylendiamin, Propylendiamin, Ethanolamin, Orthocyclohexandiamin, Aminocyclohexanalkylamin, und aromatische Amine ausgewählt aus der Gruppe enthaltend Toluoldiamin (TDA), insbesondere 2,3- und 3,4-Isomere von TDA, sowie Diphenylmethandiamin (MDA) und polymeres MDA (p-MDA), Melamin, und Mischungen daraus.

13. Verfahren zur Herstellung von Polyetherolen gemäß einem der Ansprüche 1 bis 12, wobei mindestens zwei Zerewitinoff-aktive Verbindungen Z1 verwendet werden, wobei mindestens eine Zerewitinoff-aktive Verbindung Z1a ausgewählt ist aus der Gruppe bestehend aus Alkoholen, bevorzugt ausgewählt aus der Gruppe der Polyole, insbesondere Glycerin, Ethylenglycol, Diethylenglycol, Propylenglycol, Dipropylenglycol, Pentaerythrit, Sorbitol, Saccharose, C₁- bis C₁₈-Diole, Rizinusöl, epoxydierte und ringgeöffnete Fettsäuren und deren Ester, Trimethylolpropan, Zuckerverbindungen wie beispielsweise Glucose, Sorbit, Mannit und Saccharose, mehrwertige Phenole, Resole, wie z. B. oligomere Kondensationsprodukte aus Phenol und Formaldehyd und Mannich-Kondensate aus Phenolen, Formaldehyd, Dialkanolaminen, sowie Mischungen aus mindestens zwei der aufgeführten Verbindungen, und mindestens eine Zerewitinoff-aktive Verbindung Z1b ausgewählt ist aus der Gruppe bestehend aus Aminen, insbesondere primären und sekundären aliphatischen und aromatischen Aminen oder Mischungen daraus, ganz besonders bevorzugt ausgewählt aus der Gruppe enthaltend Hexamethylendiamin, Ethylendiamin, Propylendiamin, Ethanolamin, Orthocyclohexandiamin, Aminocyclohexanalkylamin, und aromatische Amine ausgewählt aus der Gruppe enthaltend Toluoldiamin (TDA), insbesondere 2,3- und 3,4-Isomere von TDA, sowie Diphenylmethandiamin (MDA) und polymeres MDA (p-MDA), Melamin, und Mischungen daraus.

14. Verfahren zur Herstellung von Polyetherolen gemäß einem der Ansprüche 1 bis 13, wobei die mindestens eine Zerewitinoff-aktive Verbindung Z1 gleich der mindestens einen Zerewitinoff-aktiven Verbindung Z2 ist.

15. Verfahren zur Herstellung von Polyetherolen gemäß einem der Ansprüche 1 bis 13, wobei die mindestens eine Zerewitinoff-aktive Verbindung Z1 nicht der mindestens einen Zerewitinoff-aktiven Verbindung Z2 entspricht.

16. Verfahren zur Herstellung von Polyetherolen gemäß einem der Ansprüche 1 bis 15, wobei zusätzlich zu dem mindestens einen Alkylenoxid im Schritt (ii) mindestens eine Lacton-Verbindung vorhanden ist.

## Claims

1. A process for preparing polyetherols by catalytic ring-opening polymerization of at least one alkylene oxide with at least one Zerevitinov-active compound Z1 and optionally at least one Zerevitinov-active compound Z2, wherein, in a step (i), at least one nitrogen-containing cyclic compound (A) selected from the group consisting of compounds with the formula (I) 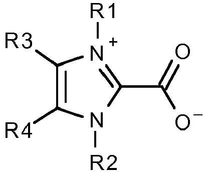 where R1 and R2 are each independently selected from alkyl and aryl, R3 and R4 are each independently selected from H, alkyl, aryl, or where R1 and R3, R3 and R4 or R2 and R4 form a ring, is initially charged together with at least one Zerevitinov-active compound Z1 or a mixture thereof, and heated to a temperature in the range from 140°C to 180°C, preferably 150°C to 170°C, for a duration of 5 to 30 minutes, preferably 10 to 25 minutes, and, in a step (ii), the metered addition of the at least one alkylene oxide is conducted, optionally in the presence of Z2.

2. The process for preparing polyetherols according to claim 1, wherein R1 and R2 in formula (I) are each primary alkyl groups.

3. The process for preparing polyetherols according to claim 1, wherein R1 in formula (I) is a primary and R2 a secondary alkyl group.

4. The process for preparing polyetherols according to claim 1, wherein R1 and R2 in formula (I) are each secondary alkyl groups.

5. The process for preparing polyetherols according to any of claims 1 to 4, wherein step (ii) is not conducted until after the end of step (i).

6. The process for preparing polyetherols according to any of claims 1 to 4, wherein step (ii) already commences during the duration of step (i).

7. The process for preparing polyetherols according to any of claims 1 to 6, wherein the temperature during the reaction with the at least one alkylene oxide in step (ii), after the end of step (i), is in the range from 90°C to 140°C, preferably in the range from 100°C to 130°C.

8. The process for preparing polyetherols according to any of claims 1 to 7, wherein at least one alkylene oxide is selected from the group consisting of ethylene oxide, propylene oxide, butylene oxide and mixtures thereof, preferably mixtures comprising propylene oxide.

9. The process for preparing polyetherols according to any of claims 1 to 8, wherein at least one Zerevitinov-active compound Z1 is selected from the group consisting of alcohols, preferably selected from the group of the polyols, especially glycerol, ethylene glycol, diethylene glycol, propylene glycol, dipropylene glycol, pentaerythritol, sorbitol, sucrose, C₁- to C₁₈-diols, castor oil, epoxidized and ring-opened fatty acids and esters thereof, trimethylolpropane, pentaerythritol, sugar compounds, for example glucose, sorbitol, mannitol and sucrose, polyhydric phenols, resols, for example oligomeric condensation products formed from phenol and formaldehyde and Mannich condensates formed from phenols, formaldehyde, dialkanolamines, and mixtures of at least two of the compounds listed.

10. The process for preparing polyetherols according to any of claims 1 to 9, wherein at least one Zerevitinov-active compound Z1 is selected from the group consisting of amines, especially primary and secondary aliphatic and aromatic amines or mixtures thereof, more preferably selected from the group comprising hexamethylenediamine, ethylenediamine, propylenediamine, ethanolamine, orthocyclohexanediamine, aminocyclohexanealkylamine, and aromatic amines selected from the group comprising toluenediamine (TDA), especially 2,3 and 3,4 isomers of TDA, and diphenylmethanediamine (MDA) and polymeric MDA (p-MDA), melamine, and mixtures thereof.

11. The process for preparing polyetherols according to any of claims 1 to 10, wherein at least one Zerevitinov-active compound Z2 is selected from the group consisting of alcohols, preferably selected from the group of the polyols, especially glycerol, ethylene glycol, diethylene glycol, propylene glycol, dipropylene glycol, pentaerythritol, sorbitol, sucrose, C₁- to C₁₈-diols, castor oil, epoxidized and ring-opened fatty acids and esters thereof, trimethylolpropane, pentaerythritol, sugar compounds, for example glucose, sorbitol, mannitol and sucrose, polyhydric phenols, resols, for example oligomeric condensation products formed from phenol and formaldehyde and Mannich condensates formed from phenols, formaldehyde, dialkanolamines, and mixtures of at least two of the compounds listed.

12. The process for preparing polyetherols according to any of claims 1 to 11, wherein at least one Zerevitinov-active compound Z2 is selected from the group consisting of amines, especially primary and secondary aliphatic and aromatic amines or mixtures thereof, more preferably selected from the group comprising hexamethylenediamine, ethylenediamine, propylenediamine, ethanolamine, orthocyclohexanediamine, aminocyclohexanealkylamine, and aromatic amines selected from the group comprising toluenediamine (TDA), especially 2,3 and 3,4 isomers of TDA, and diphenylmethanediamine (MDA) and polymeric MDA (p-MDA), melamine, and mixtures thereof.

13. The process for preparing polyetherols according to any of claims 1 to 12, wherein at least two Zerevitinov-active compounds Z1 are used, at least one Zerevitinov-active compound Z1a being selected from the group consisting of alcohols, preferably selected from the group of the polyols, especially glycerol, ethylene glycol, diethylene glycol, propylene glycol, dipropylene glycol, pentaerythritol, sorbitol, sucrose, C₁- to C₁₈-diols, castor oil, epoxidized and ring-opened fatty acids and esters thereof, trimethylolpropane, pentaerythritol, sugar compounds, for example glucose, sorbitol, mannitol and sucrose, polyhydric phenols, resols, for example oligomeric condensation products formed from phenol and formaldehyde and Mannich condensates formed from phenols, formaldehyde, dialkanolamines, and mixtures of at least two of the compounds listed, and at least one Zerevitinov-active compound Z1b being selected from the group consisting of amines, especially primary and secondary aliphatic and aromatic amines or mixtures thereof, most preferably selected from the group comprising hexamethylenediamine, ethylenediamine, propylenediamine, ethanolamine, orthocyclohexanediamine, aminocyclohexanealkylamine, and aromatic amines selected from the group comprising toluenediamine (TDA), especially 2,3 and 3,4 isomers of TDA, and diphenylmethanediamine (MDA) and polymeric MDA (p-MDA), melamine, and mixtures thereof.

14. The process for preparing polyetherols according to any of claims 1 to 13, wherein the at least one Zerevitinov-active compound Z1 is the same as the at least one Zerevitinov-active compound Z2.

15. The process for preparing polyetherols according to any of claims 1 to 13, wherein the at least one Zerevitinov-active compound Z1 does not correspond to the at least one Zerevitinov-active compound Z2.

16. The process for preparing polyetherols according to any of claims 1 to 15, wherein at least one lactone compound is present in addition to the at least one alkylene oxide in step (ii).

## Revendications

1. Procédé de fabrication de polyétherols par polymérisation catalytique par ouverture de cycle d'au moins un oxyde d'alkylène avec au moins un composé actif selon Zerewitinoff Z1 et éventuellement au moins un composé actif selon Zerewitinoff Z2, selon lequel, lors d'une étape (i), au moins un composé cyclique contenant de l'azote (A), choisi dans le groupe constitué par les composés de formule (I) : 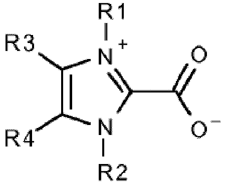 dans laquelle R1 et R2 sont chacun choisis indépendamment l'un de l'autre parmi alkyle et aryle, R3 et R4 sont chacun choisis indépendamment l'un de l'autre parmi H, alkyle, aryle, ou R1 et R3, R3 et R4, ou R2 et R4 forment un cycle, est chargé initialement conjointement avec au moins un composé actif selon Zerewitinoff Z1 ou un mélange de celui-ci, et porté à une température dans la plage allant de 140 °C à 180 °C, de préférence de 150 °C à 170 °C, pendant une durée de 5 à 30 minutes, de préférence de 10 à 25 minutes, et, lors d'une étape (ii), l'ajout dudit au moins un oxyde d'alkylène, éventuellement en présence de Z2, est réalisée.

2. Procédé de fabrication de polyétherols selon la revendication 1, selon lequel, dans la formule (I), R1 et R2 sont chacun des groupes alkyle primaires.

3. Procédé de fabrication de polyétherols selon la revendication 1, selon lequel, dans la formule (I), R1 est un groupe alkyle primaire et R2 est un groupe alkyle secondaire.

4. Procédé de fabrication de polyétherols selon la revendication 1, selon lequel, dans la formule (I), R1 et R2 sont chacun des groupes alkyle secondaires.

5. Procédé de fabrication de polyétherols selon l'une quelconque des revendications 1 à 4, selon lequel l'étape (ii) n'est réalisée qu'après la fin de l'étape (i).

6. Procédé de fabrication de polyétherols selon l'une quelconque des revendications 1 à 4, selon lequel l'étape (ii) commence déjà pendant la durée de l'étape (i).

7. Procédé de fabrication de polyétherols selon l'une quelconque des revendications 1 à 6, selon lequel la température pendant la réaction avec ledit au moins un oxyde d'alkylène à l'étape (ii) après la fin de l'étape (i) se situe dans la plage allant de 90 °C à 140 °C, de préférence dans la plage allant de 100 °C à 130 °C.

8. Procédé de fabrication de polyétherols selon l'une quelconque des revendications 1 à 7, selon lequel au moins un oxyde d'alkylène est choisi dans le groupe constitué par l'oxyde d'éthylène, l'oxyde de propylène, l'oxyde de butylène et leurs mélanges, de préférence les mélanges contenant de l'oxyde de propylène.

9. Procédé de fabrication de polyétherols selon l'une quelconque des revendications 1 à 8, selon lequel au moins un composé actif selon Zerewitinoff Z1 est choisi dans le groupe constitué par les alcools, de préférence choisi dans le groupe des polyols, notamment la glycérine, l'éthylène glycol, le diéthylène glycol, le propylène glycol, le dipropylène glycol, la pentaérythrite, le sorbitol, le saccharose, les diols en C₁ à C₁₈, l'huile de ricin, les acides gras époxydés et à cycle ouvert et leurs esters, le triméthylolpropane, la pentaérythrite, les composés de sucre tels que par exemple le glucose, le sorbitol, mannitol et le saccharose, les phénols polyvalents, les résols, tels que p. ex. les produits de condensation oligomères de phénol et de formaldéhyde et les condensats de Mannich de phénol, de formaldéhyde, de dialcanolamines, et les mélanges d'au moins deux des composés listés.

10. Procédé de fabrication de polyétherols selon l'une quelconque des revendications 1 à 9, selon lequel au moins un composé actif selon Zerewitinoff Z1 est choisi dans le groupe constitué par les amines, notamment les amines primaires et secondaires aliphatiques et aromatiques ou leurs mélanges, de manière particulièrement préférée choisi dans le groupe contenant l'hexaméthylène-diamine, l'éthylène-diamine, la propylène-diamine, l'éthanolamine, l'orthocyclohexane-diamine, l'aminocyclohexanealkylamine, et les amines aromatiques choisies dans le groupe contenant la toluène-diamine (TDA), notamment les isomères 2,3 et 3,4 de TDA, ainsi que la diphénylméthane-diamine (MDA) et la MDA polymère (p-MDA), la mélamine, et leurs mélanges.

11. Procédé de fabrication de polyétherols selon l'une quelconque des revendications 1 à 10, selon lequel au moins un composé actif selon Zerewitinoff Z2 est choisi dans le groupe constitué par les alcools, de préférence choisi dans le groupe des polyols, notamment la glycérine, l'éthylène glycol, le diéthylène glycol, le propylène glycol, le dipropylène glycol, la pentaérythrite, le sorbitol, le saccharose, les diols en C₁ à C₁₈, l'huile de ricin, les acides gras époxydés et à cycle ouvert et leurs esters, le triméthylolpropane, la pentaérythrite, les composés de sucre tels que par exemple le glucose, le sorbitol, mannitol et le saccharose, les phénols polyvalents, les résols, tels que p. ex. les produits de condensation oligomères de phénol et de formaldéhyde et les condensats de Mannich de phénol, de formaldéhyde, de dialcanolamines, et les mélanges d'au moins deux des composés listés.

12. Procédé de fabrication de polyétherols selon l'une quelconque des revendications 1 à 11, selon lequel au moins un composé actif selon Zerewitinoff Z2 est choisi dans le groupe constitué par les amines, notamment les amines primaires et secondaires aliphatiques et aromatiques ou leurs mélanges, de manière particulièrement préférée choisi dans le groupe contenant l'hexaméthylène-diamine, l'éthylène-diamine, la propylène-diamine, l'éthanolamine, l'orthocyclohexane-diamine, l'aminocyclohexanealkylamine, et les amines aromatiques choisies dans le groupe contenant la toluène-diamine (TDA), notamment les isomères 2,3 et 3,4 de TDA, ainsi que la diphénylméthane-diamine (MDA) et la MDA polymère (p-MDA), la mélamine, et leurs mélanges.

13. Procédé de fabrication de polyétherols selon l'une quelconque des revendications 1 à 12, selon lequel au moins deux composés actifs selon Zerewitinoff Z1 sont utilisés, au moins un composé actif selon Zerewitinoff Z1a étant choisi dans le groupe constitué par les alcools, de préférence choisi dans le groupe des polyols, notamment la glycérine, l'éthylène glycol, le diéthylène glycol, le propylène glycol, le dipropylène glycol, la pentaérythrite, le sorbitol, le saccharose, les diols en C₁ à C₁₈, l'huile de ricin, les acides gras époxydés et à cycle ouvert et leurs esters, le triméthylolpropane, la pentaérythrite, les composés de sucre tels que par exemple le glucose, le sorbitol, mannitol et le saccharose, les phénols polyvalents, les résols, tels que p. ex. les produits de condensation oligomères de phénol et de formaldéhyde et les condensats de Mannich de phénol, de formaldéhyde, de dialcanolamines, et les mélanges d'au moins deux des composés listés, et au moins un composé actif selon Zerewitinoff Z1b étant choisi dans le groupe constitué par les amines, notamment les amines primaires et secondaires aliphatiques et aromatiques ou leurs mélanges, de manière particulièrement préférée choisi dans le groupe contenant l'hexaméthylène-diamine, l'éthylène-diamine, la propylène-diamine, l'éthanolamine, l'orthocyclohexane-diamine, l'aminocyclohexane-alkylamine, et les amines aromatiques choisies dans le groupe contenant la toluène-diamine (TDA), notamment les isomères 2,3 et 3,4 de TDA, ainsi que la diphénylméthane-diamine (MDA) et la MDA polymère (p-MDA), la mélamine, et leurs mélanges.

14. Procédé de fabrication de polyétherols selon l'une quelconque des revendications 1 à 13, selon lequel ledit au moins un composé actif selon Zerewitinoff Z1 est identique audit au moins un composé actif selon Zerewitinoff Z2.

15. Procédé de fabrication de polyétherols selon l'une quelconque des revendications 1 à 13, selon lequel ledit au moins un composé actif selon Zerewitinoff Z1 ne correspond pas audit au moins un composé actif selon Zerewitinoff Z2.

16. Procédé de fabrication de polyétherols selon l'une quelconque des revendications 1 à 15, selon lequel au moins un composé de lactone est présent en plus dudit au moins un oxyde d'alkylène à l'étape (ii).
